# EUROPÄISCHE PATENTSCHRIFT

(11) **EP 1 981 293 B1**
(45) Veröffentlichungstag und Bekanntmachung des Hinweises auf die Patenterteilung: **30.10.2013**
(21) Anmeldenummer: 08013774.8
(22) Anmeldetag: 30.04.2003
(51) Int. Cl.: H04Q 3/00

(54) **Verfahren zum Erfassen von Anrufen und zugehörige Einheiten**
Method to detect calls and associated devices
Procédé pour détecter des appels et équipements associés

(30) Priorität: 07.05.2002 DE 10220338
(43) Veröffentlichungstag der Anmeldung: 15.10.2008
(62) Teilanmeldung aus: 03749839.1
(73) Patentinhaber: Siemens Aktiengesellschaft, 80333 München (DE)
(72) Erfinder: Hoffmann, Klaus, 81735 München (DE)

(56) Entgegenhaltungen:
- EP-A- 0 792 074
- WO-A-02/15627
- THERNELIUS F: "SIP, NAT, and Firewalls" INTERNET, Mai 2000 (2000-05), XP002209773 Gefunden im Internet: URL:http://www.cs.columbia.edu/sip/drafts/ Ther0005_SIP.pdf> [gefunden am 2002-08-13]

## Beschreibung

Die Erfindung betrifft ein Verfahren, bei dem von einem rufenden Endgerät über eine Signalisierungseinheit an ein gerufenes Endgerät eine Rufanforderung gerichtet wird, um eine Datenübertragung zwischen den Endgeräten zu ermöglichen. Zwischen dem rufenden Endgerät und dem gerufenen Endgerät werden dann Nutzdaten übertragen, z.B. Gesprächsdaten. Beispielsweise wird während der Datenübertragung oder im Zusammenhang mit der die Datenübertragung betreffenden Signalisierung wird von dem gerufenen Endgerät an die Signalisierungseinheit eine Erfassungsanforderung gerichtet. Beispielsweise auf Grund der Erfassungsanforderung vermerkt die Signalisierungseinheit ein Kennzeichen des rufenden Endgerätes, beispielsweise wird das Kennzeichen gespeichert, die Speicherung des Kennzeichens veranlasst oder das Kennzeichen wird auf einer Ausgabeeinheit ausgegeben.

Für durchschaltevermittelte Datenübertragungsnetze ist ein solches Verfahren im Standard ITU-T (International Telecommunication Union - Telecommunication Standardization Sector) - Q.951.7, "Stage 3 description for number identification supplementary services using DSS 1: Malicious Call Identification (MCID)" festgelegt. Das Leistungsmerkmal wird insbesondere im Zusammenhang mit der Vorbereitung gerichtlicher Verfahren genutzt.

In einem durchschaltevermittelten Datenübertragungsnetz werden die Daten in Zeitkanälen gemäß einem Zeitmultiplexverfahren übertragen. Vor der Übertragung der Daten werden die Zeitkanäle in einer Verbindungsaufbauphase durchgeschaltet und bleiben dann für die Dauer des Rufes für die am Ruf beteiligten Endgeräte reserviert. Die Daten sind beispielsweise Gesprächsdaten oder Videodaten, wie sie bei einer Videokonferenzschaltung erzeugt werden.

Das Kennzeichen ist bei dem bekannten Verfahren eine Rufnummer, deren Aufbau im Standard ITU-T E.164 festgelegt ist. Unter der Rufnummer ist das rufende Endgerät, d.h. das Endgerät, das den Ruf aussendet, im durchschaltevermittelten Datenübertragungsnetz erreichbar.

Die Signalisierungseinheiten sind bei dem bekannten Verfahren Vermittlungsstellen eines öffentlichen Telefonnetzes. Die Signalisierungseinheiten signalisieren gemäß einem standardisierten Protokoll, insbesondere gemäß ISUP (Integrated Services digital network - User Part). Bei den bekannten Verfahren befinden sich immer beide Endgeräte im durchschaltevermittelten Datenübertragungsnetz.

In der europäischen Patentanmeldung EP 0 792 074 A2 wird ein Dienstleistungsverfahren in einem durchschaltevermittelten Fermeldevermittlungssystem und eine Nachrichtempfangschaltung zur Anwendung in einem solchen Verfahren beschrieben. In diesem wird ein Verfahren zur örtlichen Rufnummernportabilität in Verbindung mit dem Zeichgabekanal SS7 beschrieben.

Es ist Aufgabe der Erfindung, ein einfaches Verfahren anzugeben, mit dem sich insbesondere der Anwendungsbereich des Leistungsmerkmals "Erfassen von Anrufen" erweitert. Außerdem sollen ein zugehöriges Endgerät und eine zugehörige Signalisierungseinheit angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren ist das gerufene Endgerät ein Endgerät eines Datenpaketübertragungsnetzes. Außerdem signalisiert die Signalisierungseinheit gemäß einem Signalisierungsprotokoll mit Verfahrensschritten, die für eine Datenübertragung in einem Datenübertragungsnetz festgelegt worden ist.

In einem Datenpaketübertragungsnetz werden die Daten in Datenpaketen übertragen, die üblicherweise einen Paketkopf und einen Pakethauptteil haben. Im Paketkopf befinden sich Angaben über den Empfänger des Datenpaketes. Damit lassen sich die Datenpakete im Datenpaketübertragungsnetz weiterleiten, ohne dass auch auf unteren Protokollebenen eine Verbindung hergestellt werden muss. Ein Beispiel für ein Datenpaketübertragungsnetz ist ein gemäß Internetprotokoll arbeitendes Datenpaketübertragungsnetz, z.B. das Internet. Jedoch gibt es auch andere Datenpaketübertragungsnetze, wie z.B. das ATM-Netz (Asynchronous Transfer Mode), in welchem die Datenpakete auch als Zellen bezeichnet werden.

Beispiele für Signalisierungsprotokolle in Datenpaketübertragungsnetzen sind:
- die Protokolle der ITU-T H.323-Protokollfamilie, insbesondere das Protokoll H.225,
- das SIP-Protokoll (Session Initiation Protocol) gemäß RFC 2543 bzw. RFC 2543 bis der IETF (Internet Engineering Task Force), oder
- ein ATM-Signalisierungsprotokoll.

Die Signalisierungsprotokolle für eine Datenübertragung in einem Datenpaketübertragungsnetz unterscheiden sich erheblich von den Signalisierungsprotokollen für ein durchschaltevermitteltes Datenübertragungsnetz und wurden bisher weitgehend unabhängig von diesen Signalisierungsprotokollen festgelegt.

Durch das erfindungsgemäße Verfahren wird erreicht, dass das Leistungsmerkmal "Erfassen von Anrufen" nun auch dann eingesetzt werden kann, wenn sich das gerufene Endgerät in einem Datenpaketübertragungsnetz befindet. Der Anwendungsbereich des Leistungsmerkmals "Erfassen von Anrufen" wird damit erheblich erweitert, weil ein großer Anteil von Endgeräten an Datenpaketübertragungsnetze angeschlossen ist. Der Anteil dieser Endgeräte an der Gesamtzahl von Endgeräten in durchschaltevermittelten Datenübertragungsnetzen und in Datenpaketübertragungsnetzen steigt weiter.

Erfindungsgemäß erfolgen bei dem Verfahren zum Erfassen von Anrufen,bei dem eine durch ein rufendes Endgerät veranlasste Rufanforderung von einer Zugangseinheit eines gerufenen Endgerätes eines Datenpaketübertragungsnetzes empfangen wird, folgende Schritte: von der Zugangseinheit wird daraufhin eine Invite-Nachricht zum gerufenen Endgerät gesendet,
daraufhin wird vom gerufenen Endgerät eine erste 200-OK-Nachricht an die Zugangseinheit gesendet,
im Falle eines Erfassungswunsches sendet das gerufene Endgerät eine Erfassungs-Nachricht zur Zugangseinheit, um eine Erfassung des rufenden Endgerätes zu veranlassen.

Bei einer Weiterbildung wird die Erfassungsanforderung mit einer Nachricht und/oder mit einem Informationselement übertragen, die für die Signalisierung im Datenpaketübertragungsnetz festgelegt worden ist. Bei einer Weiterbildung wird eine Erfassungsanforderung verwendet, die zusätzlich für das betreffende Signalisierungsprotokoll der Signalisierungseinheit festgelegt werden musste.

Bei einer alternativen Weiterbildung wir vorzugsweise in der Signalisierungseinheit ein Kennzeichen für das gerufene Endgerät im Zusammenhang mit dem Leistungsmerkmal "generelles Erfassen von Anrufen" gespeichert. Beim Eintreffen der Rufanforderung wird durch die Signalisierungseinheit (44) geprüft, ob das Kennzeichen des zu rufenden Endgerätes gespeichert worden ist. Das Kennzeichen des rufenden Endgerätes wird vermerkt, wenn das Kennzeichen des zu rufenden Endgerätes (36) gespeichert worden ist. Damit muss bei dieser Weiterbildung keine separate Erfassungsanforderung festgelegt und mit Bezug auf einzelne Anrufe erzeugt werden.

Bei einer Weiterbildung des erfindungsgemäßen Verfahrens wird das Kennzeichen in Zusammenhang mit der Rufanforderung zu der Signalisierungseinheit übermittelt. Diese Maßnahme ermöglicht es, das Kennzeichen zu vermerken, ohne dass es vorher durch ein aufwendigeres Verfahren angefordert werden muss.

Bei einer nächsten Weiterbildung des Verfahrens zum Erfassen von Anrufen ist das rufende Endgerät ein Endgerät eines durchschaltevermittelten Datenübertragungsnetzes. Das Kennzeichen des rufenden Endgerätes wird aufgrund der Erfassungsanforderung von der Signalisierungseinheit über eine zur Signalisierung dienende Netzübergangseinheit zum durchschaltevermittelten Datenübertragungsnetz mit Hilfe einer Kennzeichenanforderung angefordert. Zur Bearbeitung der Kennzeichenanforderung im durchschaltevermittelten Datenübertragungsnetz wird ein standardisiertes Verfahren eingesetzt, insbesondere ein Verfahren gemäß Standard ITU-T Q.731.7, "Stage 3 description for number identification supplementary services using signalling System No.7: Malicious Call Identification (MCID)".

Alternativ oder kumulativ wird zur Übertragung der Kennzeichenanforderung ein Verfahren gemäß BICC-Standard (Bearer Independent Call Control) Leistungsmerkmalssatz Zwei (CS2 - Capability Set) eingesetzt, siehe ITU-T Q.1902.1 bis Q.1902.6. Bei einer nächsten Alternative wird die Kennzeichenanforderung gemäß dem Protokoll SIP-T (SIP for Telephones) in Übereinstimmung mit dem RFC 3204 der IETF (Internet Engineering Task Force) übertragen.

Die Verwendung der genannten Standards bietet die Möglichkeit, dass im Wesentlichen nur noch Verfahrensschritte zum Anfordern des Kennzeichens zwischen der Netzübergangseinheit und der Signalisierungseinheit neu festgelegt werden müssen. Beim Übermitteln des Kennzeichens bis zur Netzübergangseinheit kann zum großen Teil oder vollständig auf bereits festgelegte Verfahren zurückgegriffen werden.

Auch der ISUP-Standard lässt sich so erweitern, dass er für die Signalisierung bei einer Datenübertragung von einem Telefonnetz über ein Datenpaketübertragungsnetz zu einem Telefonnetz geeignet ist. Diese Erweiterung ist auch nutzbar, wenn sich das eine Endgerät in dem Datenpaketübertragungsnetz befindet.

Bei einer anderen Weiterbildung des erfindungsgemäßen Verfahrens ist das rufende Endgerät ein Endgerät eines Datenpaketübertragungsnetzes. Die Signalisierungseinheit oder eine andere Signalisierungseinheit prüft die Zugangsberechtigung des rufenden Endgerätes zum Datenpaketübertragungsnetz. Signalisierungseinheiten, welche solche Prüfungen ausführen, werden beispielsweise als Proxy oder als Gatekeeper bezeichnet. Durch die Prüfung der Zugangsberechtigung des rufenden Endgerätes werden Manipulationen an dem vom rufenden Endgerät übermittelten Kennzeichen erschwert. Das vermerkte Kennzeichen stimmt so mit einer hohen Wahrscheinlichkeit mit dem tatsächlichen Kennzeichen des rufenden Endgerätes überein.

Bei einer nächsten Weiterbildung wird die Erfassungsanforderung in einer INFO-Nachricht mit dem INFO-Verfahren gemäß Defacto-Standard RFC 2976 der IETF übertragen. Die INFO-Nachricht wird auch als Request, d.h. als Anforderung bezeichnet. Ein Kopfteil (header) der INFO-Nachricht oder ein Hauptteil (body) der INFO-Nachricht enthält ein Informationselement, mit dem die Erfassungsanforderung eindeutig gekennzeichnet wird, beispielsweise ein Informationselement "Ausdruck", mit dem der Ausdruck des Kennzeichens in der Signalisierungseinheit angefordert wird. Bei dieser Weiterbildung wird auf die bereits festgelegte INFO-Nachricht zurückgegriffen. Damit müssen zur Implementierung des Verfahrens in Signalisierungseinheiten und Endgeräten nur kleine Ergänzungen vorgenommen werden.

Bei einer anderen Weiterbildung wird die Erfassungsaufforderung in einer Nachricht mit einem für die Erfassung von Anrufen festgelegten Verfahren gemäß einem RFC übertragen. Das Festlegen eines zusätzlichen RFC ist insbesondere dann sinnvoll, wenn noch mehrere Informationselemente benötigt werden, die mit dem Verfahren zum Erfassen von Anrufen in Zusammenhang stehen.

Bei einer Ausgestaltung ist das Auftreten der Nachricht selbst bereits die Anforderung, so dass keine zusätzlichen Informationselemente in der Nachricht zum Kennzeichnen der Erfassungsanforderung enthalten sind. Alternativ enthält die Nachricht jedoch in ihrem Kopfteil (header) oder in ihrem Hauptteil (body) ein Informationselement, das die Erfassungsanforderung eindeutig kennzeichnet.

Bei einer Weiterbildung werden neben dem Kennzeichen des rufenden Endgerätes noch die folgenden Daten vermerkt:
- das Kennzeichen des gerufenen Endgerätes,
- bei einer Rufumleitung die Kennzeichen aller an der Rufumleitung beteiligten Endgeräte,
- das Datum und die Uhrzeit der Datenübertragung,
- Kennzeichen für die bei der Rufbearbeitung beteiligten Signalisierungseinheiten, und
- Kennzeichen, die bei der Übertragung der Nutzdaten relevant sind, z.B. eine IP-Adresse und die zugehörige RTP-Portnummer (Real Time Protocol) der Netzübergangseinheit 28 und/oder des Endgerätes 36.

Durch die Speicherung der zusätzlichen Daten wird das Leistungsmerkmal "Erfassen von Anrufen" aufgewertet.

Die Erfindung betrifft außerdem ein Endgerät und eine Signalisierungs- bzw. Zugangseinheit, die zum Ausführen des erfindungsgemäßen Verfahrens bzw. einer seiner Weiterbildungen geeignet sind.. Demzufolge gelten für das Endgerät undfür die Signalisierungseinheit die oben genannten technischen Wirkungen.

Im Folgenden werden Ausführungsbeispiele der Erfindung an Hand der beiliegenden Zeichnungen erläutert. Darin zeigen:
Figur 1 Einheiten eines Telefonnetzes und des Internets für die Datenübertragung zwischen einem Telefon und einem SIP-Endgerät sowie für die zugehörige Signalisierung,
Figur 2 Einheiten des Internets für die Datenübertragung zwischen zwei SIP-Endgeräten sowie für die zugehörige Signalisierung, und
Figur 3 im Internet übertragene Nachrichten zum Nutzen des Leistungsmerkmals "Erfassen eines Anrufes".

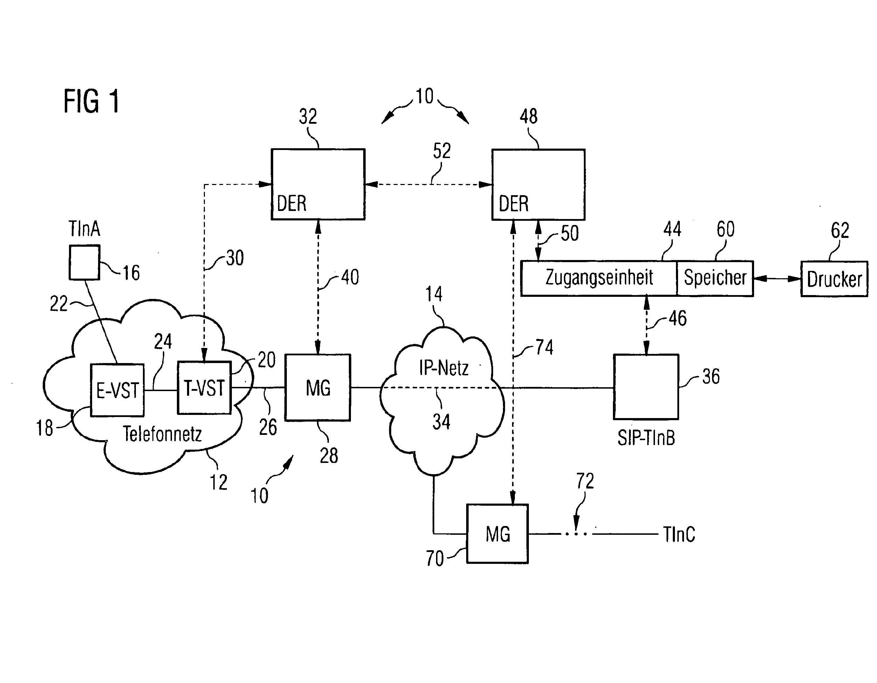

Figur 1 zeigt eine Netzübergangsfunktion 10 zwischen einem Telefonnetz 12 und einem Datenpaketübertragungsnetz 14, z.B. dem Internet. Das Telefonnetz 12 ist beispielsweise das Telefonnetz der Deutschen Telekom AG. In Figur 1 sind ein Telefon 16 eines rufenden Teilnehmers TlnA, eine Ursprungsvermittlungsstelle 18 und eine Transitvermittlungsstelle 20 des Telefonnetzes 12 dargestellt. Zwischen dem Endgerät 16 und der Ursprungsvermittlungsstelle 18 liegt eine Teilnehmeranschlussleitung 22.

Die Ursprungsvermittlungsstelle 18 ist mit der Transitvermittlungsstelle 20 über eine PCM-30-Übertragungsstrecke 24 verbunden. Die Gesprächsdaten werden in einem Zeitkanal übertragen, und die Signalisierung wird gemäß ISUP-Protokoll ausgeführt. Die Ursprungsvermittlungsstelle 18 und die Transitvermittlungsstelle 20 sind beispielsweise herkömmliche Vermittlungsstellen vom Typ EWSD der Firma Siemens AG.

Von der Transitvermittlungsstelle 20 führt eine PCM-30-Übertragungsstrecke 26 zum Übertragen der Nutzdaten zu einer Netzübergangseinheit 28, die einen Teil der Netzübergangsfunktion 10 erbringt. Eine Signalisierungsverbindung 30 liegt zwischen der Transitvermittlungsstelle 20 und einem Diensterbringungsrechner 32, der ebenfalls einen Teil der Netzübergangsfunktion 10 erbringt. Auf der Signalisierungsverbindung 30 wird gemäß ISUP-Protokoll signalisiert. Die Netzübergangseinheit 28 ist bspw. eine Netzübergangseinheit vom Typ hiG 1000 der Firma SIEMENS AG. Der Diensterbringungsrechner 32 ist ein Diensterbringungsrechner vom Typ hiQ 9200 der Firma SIEMENS AG.

Die Netzübergangseinheit 28 entnimmt Sprachdaten, die in einem PCM-Kanal der Übertragungsstrecke 26 empfangen werden aus dem PCM-Kanal und verpackt diese in Datenpakete, die im Datenpaketübertragungsnetz 14 weitergeleitet werden, z.B. über einen Übertragungsweg 34, der von der Netzübergangseinheit 28 durch das Datenübertragungsnetz 14 zu einem SIP-Endgerät 36 eines Teilnehmers TlnB führt. Das Endgerät 36 arbeitet gemäß dem Protokoll SIP, siehe Defacto-Standard RFC 2543. Andererseits werden in der Netzübergangseinheit 28 aus dem Datenpaketübertragungsnetz 14 empfangene Datenpakete entpackt. Die in den Datenpaketen enthaltenen Nutzdaten werden in einem Zeitkanal auf der Übertragungsstrecke 26 weitergeleitet.

Der Diensterbringungsrechner 32 steuert die Netzübergangseinheit 28 mit Hilfe des Protokolls MGCP (Media Gateway Control Protocol), siehe RFC 2705 der IETF. Dabei erzeugte Steuernachrichten werden über einen Übertragungsweg 40 übertragen, der beispielsweise durch das Internet verläuft.

Dem Endgerät 36 ist eine Zugangseinheit 44 zugeordnet, die auch als Proxy-Einheit bezeichnet wird. Die Zugangseinheit 44 prüft die Zugangsberechtigung des Endgerätes 36 und stellt SIP-Dienste zur Verfügung, insbesondere den Dienst zur Erbringung des Leistungsmerkmals "Erfassen eines Anrufes". Die Zugangseinheit 44 ist bspw. eine Zugangseinheit vom Typ hiQ 6200 der Firma SIEMENS AG.

Zwischen dem Endgerät 36 und der Zugangseinheit 44 liegt ein Signalisierungsweg 46, beispielsweise in einem lokalen Datenübertragungsnetz. Über den Signalisierungsweg 46 werden Nachrichten gemäß SIP-Protokoll ausgetauscht.

Andererseits liegt zwischen der Zugangseinheit 44 und einem Diensterbringungsrechner 48 ein Signalisierungsweg 50, über den Signalisierungsnachrichten beispielsweise ebenfalls gemäß Protokoll SIP übertragen werden. Auch der Diensterbringungsrechner 48 ist bspw. ein Diensterbringungsrechner vom Typ hiQ 9200 der Firma SIEMENS AG.

Zwischen den beiden Diensterbringungsrechnern 32 und 48 liegt ein Signalisierungsweg 52, auf dem Signalisierungsnachrichten gemäß BICC-Standard (Bearer Independent Call Control) übertragen werden. Gegebenenfalls wird in den Signalisierungsweg 52 noch ein sogenannter Call-Mediation-Netzknoten gemäß BICC-Standard einbezogen.

Es wird angenommen, dass der Teilnehmer TlnA den Teilnehmer TlnB schon einmal böswillig angerufen hat. Der Teilnehmer TlnB hat daraufhin die Freischaltung des Leistungsmerkmals "Erfassen eines Anrufs auf Anforderung" bei seinem SIP-Dienstanbieter beantragt. Das Leistungsmerkmal wurde in der Zugangseinheit 44 für den Teilnehmer TlnB freigeschaltet.

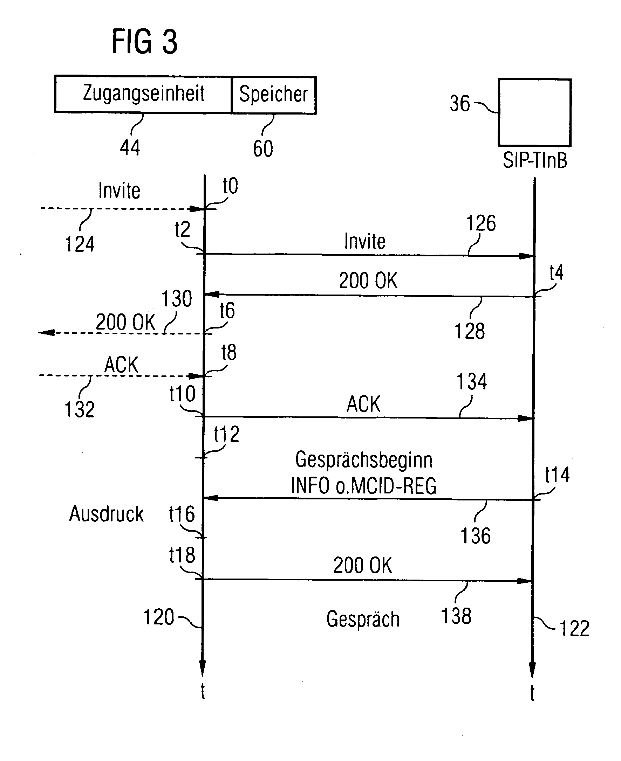

Zur Erbringung des Leistungsmerkmals "Erfassen von Anrufen" enthält die Zugangseinheit 44 eine Speichereinheit 60, in der sich die erfassten Daten dauerhaft speichern lassen sowie einen Drucker 62, mit dessen Hilfe sich die erfassten Daten unverzüglich ausdrucken lassen. Die beim Erbringen des Leistungsmerkmals "Erfassen eines Anrufs auf Anforderung" durchgeführten Verfahrensschritte werden unten an Hand der Figur 3 näher erläutert.

In Figur 1 ist außerdem eine weitere Netzübergangseinheit 70 dargestellt, die zwischen dem Internet 14 und einem Telefonnetz 72 liegt, an dem das Endgerät eines Teilnehmers TlnC angeschlossen ist. Ein Übertragungsweg 74 lässt sich zum Austausch von Steuernachrichten gemäß MGCP nutzen und liegt zwischen der Netzübergangseinheit 70 und dem Diensterbringungsrechner 48.

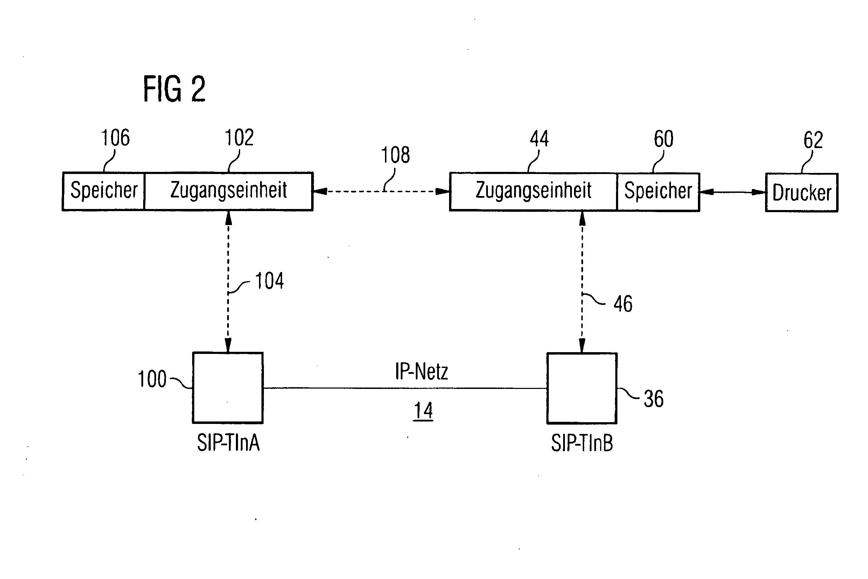

Figur 2 zeigt den Fall, in dem der Teilnehmer TlnA nicht sein Telefon 16, sondern ein SIP-Endgerät 100 nutzt, um den Teilnehmer TlnB anzurufen. Zwischen dem Endgerät 100 und einer Zugangseinheit 102 lassen sich Signalisierungsnachrichten über einen Signalisierungsweg 104 gemäß SIP-Protokoll übertragen. Die Zugangseinheit 102 ist ebenfalls eine Proxy-Einheit, die die Zugangsberechtigung des Endgerätes 100 zum Datenübertragungsnetz 14 prüft. Die Zugangseinheit 102 enthält eine Speichereinheit 106.

Zwischen der Zugangseinheit 102 und der Zugangseinheit 44 liegt ein Signalisierungsweg 108, auf dem Signalisierungsnachrichten gemäß SIP-Protokoll übertragen werden.

Figur 3 zeigt im Datenübertragungsnetz 14 übertragene Nachrichten beim Nutzen des Leistungsmerkmals "Erfassen eines Anrufes auf Anforderung". Die an Hand der Figur 3 erläuterten Nachrichten werden unabhängig davon ausgetauscht, ob der Teilnehmer TlnA vom Telefon 16 oder vom SIP-Endgerät 100 aus anruft. Im ersten Fall wird der Diensterbringungsrechner 48 einbezogen. Ruft der Teilnehmer TlnA dagegen vom SIP-Endgerät 100 aus an, so wird die Zugangseinheit 102 einbezogen.

In Figur 3 werden Vorgänge, die sich auf die Zugangseinheit 44 beziehen, mit Hilfe eines Zeitstrahls 120 dargestellt. Vorgänge, die sich auf das Endgerät 36 beziehen, werden mit Hilfe eines Zeitstrahls 122 dargestellt. Auf den Zeitstrahlen 120 und 122 liegen spätere Zeitpunkte weiter unten als frühere Zeitpunkte.

Wenn der Teilnehmer TlnA den Teilnehmer TlnB anruft, wird zu einem Zeitpunkt t0 in der Zugangseinheit 44 eine Invite-Nachricht 124 empfangen, die von dem Diensterbringungsrechner 48 bzw. von der Zugangseinheit 102 kommt. Die Invite-Nachricht 124 wird in der Zugangseinheit 44 gemäß SIP-Protokoll bearbeitet, so dass zu einem Zeitpunkt t2 eine Invite-Nachricht 126 von der Zugangseinheit 44 zum Endgerät 36 gesendet wird. Die Invite-Nachricht enthält auch die Rufnummer des Telefons 16 bzw. die Internetadresse und die Portadresse des Endgerätes 100. Die Rufnummer des Telefons 16 bzw. das Kennzeichen des Endgerätes 100 werden für die Dauer der Rufbearbeitung in einem Arbeitsspeicher der Speichereinheit 60 gespeichert.

Im Endgerät 36 wird die Invite-Nachricht 126 ebenfalls gemäß SIP-Protokoll bearbeitet. Protokollgemäß wird zu einem Zeitpunkt t4 vom Endgerät 36 eine 200-OK-Nachricht 128 an die Zugangseinheit 44 als Bestätigung gesendet.

Die Zugangseinheit 44 sendet nach dem Empfang der Nachricht 128 protokollgemäß zu einem Zeitpunkt t6 eine 200-OK-Nachricht 130 an den Diensterbringungsrechner 48 bzw. an die Zugangseinheit 102. Von der Seite des Diensterbringungsrechners 48 bzw. der Zugangseinheit 102 trifft zu einem Zeitpunkt t8 protokollgemäß eine ACK-Nachricht 132 ein, mit der bestätigt wird, dass die Datenübertragungsverbindung genutzt werden kann.

Zu einem Zeitpunkt t10 sendet die Zugangseinheit 44 aufgrund der Nachricht 132 protokollgemäß eine ACK-Nachricht 134 an das Endgerät 36.

Zu einem Zeitpunkt t12 beginnen die Teilnehmer TlnA und TlnB miteinander zu sprechen, wobei Gesprächsdaten zwischen dem Telefon 16 und dem Endgerät 36 bzw. zwischen dem Endgerät 100 und dem Endgerät 36 übertragen werden. Der Teilnehmer TlnB erkennt die Stimme des böswilligen Teilnehmers TlnA wieder und drückt eine Funktionstaste an seinem Endgerät, die mit der Funktion "Erfassen eines Anrufs auf Anforderung" verknüpft ist. Daraufhin erzeugt das Endgerät 36 zu einem Zeitpunkt t14 automatisch eine INFO-Nachricht 136 gemäß RFC 2976. Die Nachricht 136 enthält ein nutzerspezifisches Informationselement "Ausdruck".

Die INFO-Nachricht 136 wird in der Zugangseinheit 44 empfangen und ausgewertet. Aufgrund des Informationselementes "Ausdruck" wird zu einem Zeitpunkt t16 die in der Zugangseinheit 44 bekannte Rufnummer des Teilnehmers TlnA bzw. das Kennzeichen des Endgerätes 100 in einem nichtflüchtigen Speicher der Speichereinheit 60 dauerhaft gespeichert, bspw. in einer Datei gemeinsam mit anderen Kennzeichen, die für andere Teilnehmer bzw. nur für den Teilnehmer TlnB im Zusammenhang mit dem Leistungsmerkmal "Erfassen eines Anrufs auf Anforderung" zu speichern sind. Gleichzeitig wird dieses Kennzeichen auf dem Drucker 62 ausgedruckt. Dauerhaft bedeutet, dass die Daten auch nach dem Ende des Gespräches zwischen dem TlnA und dem Teilnehmer TlnB vermerkt bleiben bis sie Ausgedruckt werden, um dann zum Beispiel in einem gerichtlichen Verfahren als Beweismittel zu dienen.

Zu einem Zeitpunkt t18 bestätigt die Zugangseinheit 44 die INFO-Nachricht 136 mit Hilfe einer 200-OK-Nachricht 138. Anschließend wird das Gespräch zwischen den Teilnehmern TlnA und TlnB fortgesetzt oder der Teilnehmer TlnB beendet das Gespräch sofort.

Bei einem anderen Ausführungsbeispiel wird an Stelle der INFO-Nachricht 136 eine eigens für das Leistungsmerkmal "Erfassen eines Anrufs auf Anforderung" festgelegtes SIP-Nachricht "MCID-REG" gesendet. Auch die MCID-REG-Nachricht führt zu einem Erfassen und dauerhaft Vermerken der Rufnummer des Telefons 16 bzw. der Internetadresse des Endgerätes 100.

An Stelle des Signalisierungsprotokolls auf den Übertragungswegen 40 und 74 lässt sich bspw. auch das Signalisierungsprotokoll ITU-T H.248 einsetzen.

An Stelle des in Figur 1 erläuterten Verfahrens zur Datenübertragung zwischen dem Telefonnetz 12 und dem Internet 14 lässt sich auch ein anderes Verfahren einsetzen, beispielsweise lassen sich die Aufgaben des Diensterbringungsrechners 48 auch vom Diensterbringungsrechner 32 mit erbringen.

An Stelle des an Hand der Figur 2 erläuterten Verfahrens lassen sich ebenfalls andere Verfahren einsetzen. Beispielsweise können zwischen den Zugangseinheiten 102 und 44 noch weitere Zugangseinheiten in die Signalisierung einbezogen werden. Auch lassen sich die Nutzdaten mit Hilfe der Zugangseinheiten 102, 44 bzw. der weiteren Zugangseinheiten übertragen.

Bei einem nächsten Ausführungsbeispiel wird das Leistungsmerkmal "generelles Erfassen von Anrufen" durch den Dienstanbieter für den Teilnehmer T1nB freigeschaltet, beispielsweise auf dessen Antrag hin. Das Kennzeichen des Endgerätes 36 wird in einer Datei vermerkt. Beim Eintreffen eins Anrufes wird dass Kennzeichen des zu rufenden Endgerätes ermittelt. Die Datei wird nach diesem Kennzeichen durchsucht. Ist das Kennzeichen in der Datei enthalten, so wird das Kennzeichen des rufenden Endgerätes vermerkt, z.B. gespeichert und/oder ausgedruckt. Ist das Kennzeichen dagegen nicht in der Datei enthalten, so wird das Kennzeichen des rufenden Endgerätes nicht dauerhaft vermerkt. Der Rufaufbau wird unabhängig vom Prüfergebnis durchgeführt. Bei diesem Ausführungsbeispiel wird keine Erfassungsanforderung vom Teilnehmer TlnB benötigt, um die Rufnummer des rufenden Endgerätes dauerhaft zu vermerken.

## Patentansprüche

1. Verfahren zum Erfassen von Anrufen,
bei dem eine durch ein rufendes Endgerät (16, 100) veranlasste Rufanforderung (124) von einer Zugangseinheit (44) eines gerufenen Endgerätes (36) eines Datenpaketübertragungsnetzes (14) empfangen wird,
**dadurch gekennzeichnet, dass**
daraufhin von der Zugangseinheit (44) eine Invite-Nachricht (126) zum gerufenen Endgerät (36) gesendet wird,
daraufhin vom gerufenen Endgerät (36) eine erste 200-OK-Nachricht (128) an die Zugangseinheit (44) gesendet wird,
im Falle eines Erfassungswunsches das gerufene Endgerät (36) eine Erfassungs-Nachricht (136) zur Zugangseinheit (44) sendet, um eine Erfassung des rufenden Endgerätes (16, 100) zu veranlassen.

2. Verfahren nach Anspruch 1,
**dadurch gekennzeichnet,**
**dass** die Erfassung des rufenden Endgerätes (16, 100) in der Zugangseinheit (44) vorgenommen wird.

3. Verfahren nach Anspruch 1 oder 2,
**dadurch gekennzeichnet,**
**dass** die Zugangseinheit (44) nach Empfang der ersten 200-OK-Nachricht (128) eine zweite 200-OK-Nachricht (130) in Richtung rufenden Endgerät (16,100) sendet.

4. Verfahren nach einem der vorhergehenden Ansprüche, **dadurch gekennzeichnet,**
**dass** die Zugangseinheit (44) ein Kennzeichen des rufenden Endgerätes (16, 100) vermerkt, insbesondere das Kennzeichen in einer Speichereinheit (60) speichert, oder die Speicherung veranlasst.

5. Verfahren nach einem der vorhergehenden Ansprüche, **dadurch gekennzeichnet,**
**dass** die Zugangseinheit (44) aufgrund der ErfassungsNachricht (136) die Rufnummer des rufenden Endgerätes (16, 100) speichert.

6. Verfahren nach einem der vorhergehenden Ansprüche, **dadurch gekennzeichnet,**
**dass** das rufende Endgerät (16) ein Endgerät eines durchschaltevermittelten Datenübertragungsnetzes (12) ist.

7. Verfahren nach einem der vorhergehenden Ansprüche, **dadurch gekennzeichnet,**
**dass** die Zugangseinheit (44) die Zugangsberechtigung des rufenden Endgerätes (16, 100) zum Datenpaketübertragungsnetz (14) prüft.

8. Verfahren nach einem der vorhergehenden Ansprüche, **dadurch gekennzeichnet,**
**dass** neben dem Kennzeichen des rufenden Endgerätes (16, 100) das Kennzeichen des gerufenen Endgerätes (36) und/oder das Datum und/oder die Uhrzeit vermerkt wird.

9. Endgerät (36), insbesondere Telefon, eines Datenpaketübertragungsnetzes (14), das eine Steuerung umfasst,
**dadurch gekennzeichnet,**
**dass** die Steuerung derart ausgestaltet ist, dass das Endgerät auf eine Invite-Nachricht (126), veranlasst durch ein anrufendes Endgerät (16, 100), eine erste 200-OK-Nachricht (128) an eine Zugangseinheit (44) sendet,
im Falle eines Erfassungswunsches das Endgerät (36) eine Erfassungs-Nachricht (136) zur Zugangseinheit (44) sendet, um eine Erfassung des rufenden Endgerätes (16, 100) zu veranlassen.

10. Zugangseinheit (44) für ein Datenpaketübertragungsnetz (14) mit einer Steuereinheit,
**dadurch gekennzeichnet,**
**dass** eine erste, von einem gerufenen Endgerät (36) gesendete 200 OK Nachricht (128) durch die Zugangseinheit (44) empfangen wird
und
**dass** eine Erfassungsnachricht (136) zur Erfassung eines rufenden Endgeräts (16,100) durch die Zugangseinheit (44) empfangen und ausgewertet wird, und
**dass** die Steuereinheit eine Funktion erbringt, welche automatisch ein Kennzeichen des das gerufene Endgerät (36) rufenden Endgerätes (16, 100) vermerkt.

11. Zugangseinheit (44) nach Anspruch 10,
**dadurch gekennzeichnet,**
**dass** die Steuereinheit derart ausgestaltet ist, dass nach Empfang einer Erfassungs-Nachricht (136) eine Speicherung von Daten des rufenden Endgerätes (16, 100) durchgeführt wird.

## Claims

1. Method for detecting calls,
in which a call request (124) initiated by a calling terminal device (16, 100) is received by an access unit (44) of a called terminal device (36) of a data packet transmission network (14),
**characterised in that**
in response an invite message (126) is sent by the access unit (44) to the called terminal device (36),
in response a first 200 OK message (128) is sent by the called terminal device (36) to the access unit (44),
in the event of a detection request the called terminal device (36) sends a detection message (136) to the access unit (44) in order to initiate a detection of the calling terminal device (16, 100).

2. Method according to claim 1,
**characterised in that**
the detection of the calling terminal device (16, 100) is undertaken in the access unit (44).

3. Method according to claim 1 or 2,
**characterised in that**
the access unit (44), upon receipt of the first 200 OK message (128), sends a second 200 OK message (130) in the direction of the calling terminal device (16, 100).

4. Method according to one of the preceding claims, **characterised in that**
the access unit (44) notes an identifier of the calling terminal device (16, 100), in particular stores the identifier in a storage unit (60), or initiates the storage.

5. Method according to one of the preceding claims, **characterised in that**
the access unit (44) stores the call number of the calling terminal device (16, 100) on the basis of the detection message (136).

6. Method according to one of the preceding claims, **characterised in that**
the calling terminal device (16) is a terminal device of a circuit-switched data transmission network (12).

7. Method according to one of the preceding claims, **characterised in that**
the access unit (44) checks the access authorisation of the calling terminal device (16, 100) for the data packet transmission network (14).

8. Method according to one of the preceding claims, **characterised in that**
in addition to the identifier of the calling terminal device (16, 100) the identifier of the called terminal device (36) and/or the date and/or the time is noted.

9. Terminal device (36), in particular telephone, of a data packet transmission network (14), which comprises a controller,
**characterised in that**
the controller is configured such that the terminal device, in response to an invite message (126), initiated by a calling terminal device (15, 100), sends a first 200 OK message (128) to an access unit (44),
in the event of a detection request the terminal device (36) sends a detection message (136) to the access unit (44) in order to initiate a detection of the calling terminal device (16, 100).

10. Access unit (44) for a data packet transmission network (14) having a control unit,
**characterised in that**
a first 200 OK message (128) sent by a called terminal device (36) is received by the access unit (44)
and
that a detection message (136) to detect a calling terminal device (16, 100) is received and evaluated by the access unit (44), and
that the control unit performs a function which automatically notes an identifier of the terminal device (16, 100) calling the called terminal device (36).

11. Access unit (44) as claimed in claim 10,
**characterised in that**
the control unit is configured such that on receipt of a detection message (136) a storage of data of the calling terminal (16, 100) is performed.

## Revendications

1. Procédé pour détecter des appels,
selon lequel une requête d'appel (124) lancée par un terminal appelant (16, 100) est reçue par une unité d'accès (44) d'un terminal appelé (36) d'un réseau de transmission de paquets de données (14),
**caractérisé en ce que** :
- l'unité d'accès (44) envoie ensuite un message
« Invite » (126) au terminal appelé (36) ;
- le terminal appelé (36) envoie ensuite un premier message « 200 OK » (128) à l'unité d'accès (44) ;
- dans le cas d'une demande de détection, le terminal appelé (36) envoie un message de détection (136) à l'unité d'accès (44) pour faire détecter le terminal appelant (16, 100).

2. Procédé selon la revendication 1, **caractérisé en ce que** la détection du terminal appelant (16, 100) est effectuée dans l'unité d'accès (44).

3. Procédé selon la revendication 1 ou 2, **caractérisé en ce que**, après la réception du premier message « 200 OK » (128), l'unité d'accès (44) envoie un deuxième message « 200 OK » (130) en direction du terminal appelant (16, 100).

4. Procédé selon l'une des revendications précédentes, **caractérisé en ce que** l'unité d'accès (44) prend note d'un identifiant du terminal appelant (16, 100) et, plus particulièrement, sauvegarde l'identifiant dans une unité de mémoire (60), ou le fait sauvegarder.

5. Procédé selon l'une des revendications précédentes, **caractérisé en ce que**, du fait du message de détection (136), l'unité d'accès (44) sauvegarde le numéro d'appel du terminal appelant (16, 100).

6. Procédé selon l'une des revendications précédentes, **caractérisé en ce que** le terminal appelant (16) est un terminal d'un réseau de transmission de données à commutation de circuits (12).

7. Procédé selon l'une des revendications précédentes, **caractérisé en ce que** l'unité d'accès (44) contrôle l'autorisation d'accès du terminal appelant (16, 100) au réseau de transmission de paquets de données (14).

8. Procédé selon l'une des revendications précédentes, **caractérisé en ce qu'**il est pris note non seulement de l'identifiant du terminal appelant (16, 100), mais aussi de l'identifiant du terminal appelé (36) et/ou de la date et/ou de l'heure.

9. Terminal (36), en particulier téléphone, d'un réseau de transmission de paquets de données (14), incluant une commande, **caractérisé en ce que** :
- la commande est réalisée de manière telle que le terminal, en réaction à un message « Invite » (126) et en réponse à un terminal appelant (16, 100), envoie un premier message « 200 OK » (128) à une unité d'accès (44) ;
- dans le cas d'une demande de détection, le terminal (36) envoie un message de détection (136) à l'unité d'accès (44) pour faire détecter le terminal appelant (16, 100).

10. Unité d'accès (44) pour un réseau de transmission de paquets de données (14) avec une unité de commande, **caractérisée en ce que** :
- un premier message « 200 OK » (128) émis par un terminal appelé (36) est reçu par l'unité d'accès (44) et
- un message de détection (136) pour la détection d'un terminal appelant (16, 100) est reçu et évalué par l'unité d'accès (44) et
- l'unité de commande fournit une fonction qui prend automatiquement note d'un identifiant du terminal (16, 100) qui appelle le terminal appelé (36).

11. Unité d'accès (44) selon la revendication 10, **caractérisée en ce que** l'unité de commande est réalisée de manière telle que, après la réception d'un message de détection (136), une sauvegarde de données du terminal appelant (16, 100) est effectuée.
